# EUROPEAN PATENT APPLICATION

(11) **EP 3 328 041 A1**
(43) Date of publication of application: **30.05.2018**
(21) Application number: 16827288.8
(22) Date of filing: 26.08.2016
(51) Int. Cl.: H04M 1/725

(54) **CLOTHES MATCHING RECOMMENDATION METHOD AND SMART TERMINAL**

(30) Priority: 23.07.2015 CN 201510439459
(71) Applicant: Qingdao Haier Washing Machine Co., Ltd., Shandong 266101 (CN)
(72) Inventor: XU, Sheng, Qingdao, Shandong 266101 (CN); YIN, Junming, Qingdao, Shandong 266101 (CN); LIU, Mingyao, Qingdao, Shandong 266101 (CN)
(74) Representative: Gill Jennings & Every LLP
(86) International application number: PCT/CN2016/096863
(87) International publication number: WO 2017/012597

(57) **Abstract**

A method for recommending clothes collocation and an intelligent terminal are disclosed. The method is applied to the intelligent terminal. The method includes: a photo album of the intelligent terminal is accessed and clothes are searched for according to occurrence frequencies of the clothes in the photo album; a clothes collocation database is searched according to information of clothes when a preset condition is satisfied; and a recommended collocation solution is displayed.

## Description

### TECHNICAL FIELD

The present application relates to the technical field of communication, and for example, relates to a method for recommending clothes collocation and an intelligent terminal.

### BACKGROUND

As a living standard of people is improved, kinds and quantity of clothes are increasing. People always feel annoyed about what they wear to go out every day, and do not known how to collocate the clothes. In a relevant technology, recommendation for clothes collocation is performed completely by means of manpower, while those people hoping to dress up in fashion but having low or no sensitivity to fashion feel are very confused.

### SUMMARY

A purpose of the present disclosure is to propose a method for recommending clothes collocation by means of an intelligent terminal.

Another purpose of the present disclosure is to propose an intelligent terminal capable of realizing the method for recommending clothes collocation.

On one hand, an embodiment of the present disclosure provides a method for recommending clothes collocation. This method is applied to the intelligent terminal. The method includes: accessing a photo album of the intelligent terminal and searching for clothes according to occurrence frequencies of the clothes in the photo album; searching a clothes collocation database according to information of clothes when a preset condition is satisfied; and displaying a recommended collocation solution.

The clothes collocation database is a local database; and/or the clothes collocation database is stored on a server and the intelligent terminal is in communication connection with the server.

Optionally, the searching for clothes according to occurrence frequencies of the clothes in the photo album and searching a clothes collocation database according to information of the clothes when a preset condition is satisfied includes:
searching for clothes with a highest occurrence frequency in the photo album and selecting the clothes with the highest occurrence frequency;
judging whether the selected clothes need a collocation recommendation; and
if the selected clothes need a collocation recommendation, searching the clothes collocation database according to information of the selected clothes; if the selected clothes do not need any collocation recommendation, excluding the selected clothes and then searching again for clothes with the highest occurrence frequency in the photo album.

Optionally, the searching for clothes according to occurrence frequencies of the clothes in the photo album and searching a clothes collocation database according to information of clothes when a preset condition is satisfied includes:
searching for clothes with the highest occurrence frequency in the photo album and selecting the clothes with the highest occurrence frequency;
judging whether the selected clothes need the collocation recommendation;
if the selected clothes need the collocation recommendation, judging whether the selected clothes are a single piece of clothes or a suit of clothes; and searching the clothes collocation database according to the information of the selected clothes when the selected clothes are a single piece of clothes.

Optionally, the method further includes if the selected clothes are a suit of clothes, directly using the suit of clothes as the recommended collocation solution.

Optionally, searching for the clothes with the highest occurrence frequency in the photo album and selecting the clothes with the highest occurrence frequency includes:
searching for the clothes with the highest occurrence frequency in the photo album according to color and style information and selecting the clothes with the highest occurrence frequency.

Optionally, the method further includes:
invoking a camera of the intelligent terminal to take a photograph and storing the photograph in a wardrobe database;
selecting the clothes needing a collocation recommendation from the wardrobe database;
searching the clothes collocation database according to information of the selected clothes needing the collocation recommendation to obtain the recommended collocation solution; and
displaying the recommended collocation solution on the intelligent terminal.

Optionally, the searching a clothes collocation database according to information of clothes includes:
searching the clothes collocation database according to information of the selected clothes needing the collocation recommendation and time information to obtain the collocation solution matching the current time information and information of the clothes.

Optionally, the searching a clothes collocation database according to information of the clothes further includes: searching the clothes collocation database according to the information of the selected clothes needing the collocation recommendation, the time information and geographical position information to obtain the collocation solution matching the current time information, the information of the clothes and the geographical position information.

Optionally, before searching the clothes collocation database, the method further includes:
selecting an application scenario.

Optionally, the application scenario includes outdoors, a fitness room, a company, a house and a feast.

On the other hand, an embodiment of the present disclosure provides an intelligent terminal, including:
at least one processor and
a memory in communication connection with the at least one processor.

The memory stores instructions executable by the at least one processor, and execution of the instructions by the at least one processor causes the at least one processor to perform the method for recommending clothes collocation of any embodiment of the present disclosure.

An embodiment of the present disclosure provides a non-transitory computer readable storage medium. The non-transitory computer readable storage medium stores computer instructions. The computer instructions are configured to cause a computer to execute the method for recommending clothes collocation of any embodiment of the present disclosure.

An embodiment of the present disclosure provides computer program product including a calculation program stored on a non-transitory computer readable storage medium. The computer program includes program instructions, and when the program instructions are executed by a computer, the computer is caused to execute the method for recommending clothes collocation of any embodiment of the present disclosure. Through the method for recommending clothes collocation provided in embodiments of the present disclosure, favorite clothes of a user can be selected from the photo album of the intelligent terminal; and the recommended collocation solution can be obtained according to information of the clothes, thereby saving the user's time for clothes collocation and satisfying a fashionable need of the user.

### BRIEF DESCRIPTION OF DRAWINGS

One or more embodiments are exemplarily described through corresponding figures in drawings. These exemplary descriptions do not form a limitation to the embodiments. Elements having the same reference numerals in the drawings represent similar elements. Unless otherwise specified, the figures in the drawings do not form a proportional limit.
Fig. 1 is a flowchart illustrating a method for recommending clothes collocation provided in an embodiment 1 of the present disclosure;
Fig. 2A is a flowchart 1 illustrating a method for recommending clothes collocation provided in an embodiment 2 of the present disclosure;
Fig. 2B is a flowchart 2 illustrating a method for recommending clothes collocation provided in an embodiment 2 of the present disclosure;
Fig. 3 is a flowchart illustrating a method for recommending clothes collocation provided in an embodiment 3 of the present disclosure; and
Fig. 4 is a schematic diagram illustrating a hardware structure of an intelligent terminal provided in an embodiment 5 of the present disclosure.

### DETAILED DESCRIPTION

The technical solution of the present disclosure will be described below with reference to drawings through specific embodiments. Features in embodiments can be mutually combined in case of no conflict.

### Embodiment 1:

Embodiments of the present disclosure provide a method for recommending clothes collocation. An application program with a clothes collocation function may be installed on an intelligent terminal. The intelligent terminal is in wireless communication connection with a server storing a clothes collocation database. The intelligent terminal may be a mobile phone, a tablet computer and the like. Of course, the clothes collocation database may also be a local database, or the server and the local each have a clothes collocation database.

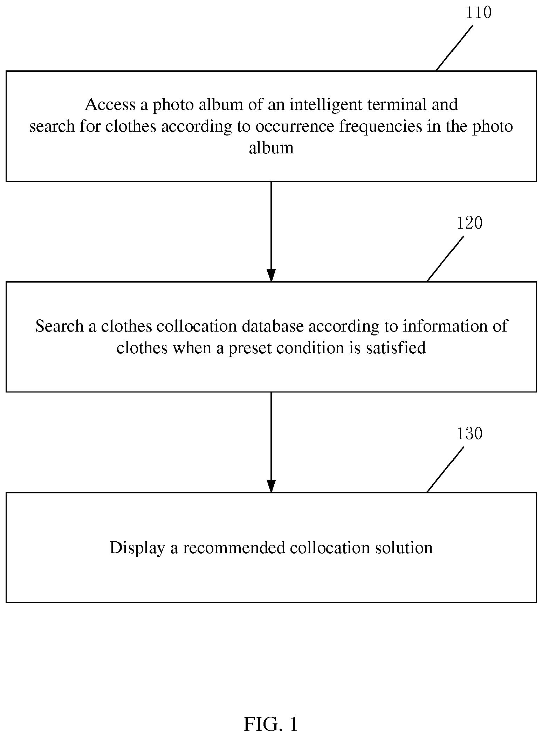

Fig. 1 is a flowchart illustrating a method for recommending clothes collocation provided in the embodiment 1 of the present disclosure. The method includes S110 to S130.

In S110, a photo album of the intelligent terminal is accessed and clothes are searched for according to occurrence frequencies of the clothes in the photo album.

In S120, a clothes collocation database is searched according to information of the clothes when a preset condition is satisfied.

In S130, a recommended collocation solution is displayed.

The clothes collocation database is a local database.

And/or, the clothes collocation database is stored on a server and the intelligent terminal is in communication connection with the server.

Embodiments of the present disclosure provide a method for recommending clothes collocation. The photo album of the intelligent terminal is accessed; the clothes are searched for according to the occurrence frequencies of the clothes in the photo album; the clothes collocation database is searched according to information of the clothes when the preset condition is satisfied; and the recommended collocation solution is displayed. Favorite clothes of a user can be selected from the photo album of the intelligent terminal; and the recommended collocation solution can be obtained according to the information of the clothes, thereby saving user's time for clothes collocation and satisfying a fashionable need of the user.

### Embodiment 2

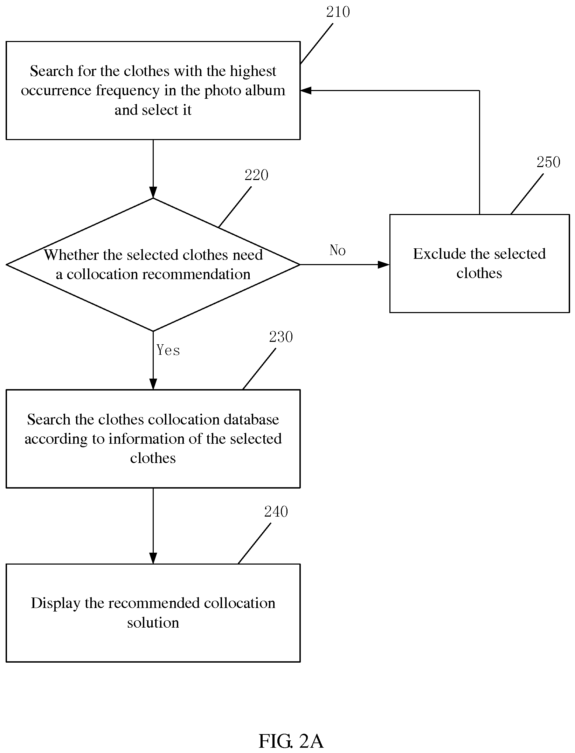

Fig. 2A is a flowchart 1 illustrating a method for recommending clothes collocation provided in the embodiment 2 of the present disclosure. An application program with clothes collocation function needs to be installed on an intelligent terminal. The intelligent terminal is in wireless communication connection with a server storing a clothes collocation database. The intelligent terminal may be a mobile phone, a tablet computer and the like. Of course, the clothes collocation database may also be a local database, or the server and the local each have a clothes collocation database.

Steps of searching for clothes according to occurrence frequencies of the clothes in the photo album and searching a clothes collocation database according to information of the clothes when a preset condition is satisfied include as follows.

In S210, the clothes with the highest occurrence frequency in the photo album are found and selected.

The clothes with the highest occurrence frequency in the photo album are found according to color and style information. Other information such as material, category and the like can also be used as reference information to find the clothes with the highest occurrence frequency, i.e., the clothes with the highest occurrence frequency are considered as the favorite clothes of the user. In S220, whether the selected clothes need a collocation recommendation is judged.

Whether the clothes found by the user are clothes to be collocated by the user is judged. If the clothes need to be collocated, the collocation solution is inquired. If the clothes do not need to be collocated, the selected clothes are excluded, and then the clothes with the highest occurrence frequency are re-searched for until the clothes that need to be collocated by the user are found.

If the clothes need to be collocated, S230 is executed: the clothes collocation database is searched according to the selected information of the clothes.

The method of searching the clothes collocation database according to the selected information of the clothes to be recommended for collocation to obtain a recommended collocation solution is not limited. Optionally, pictures of collocated clothes suits are stored in the clothes collocation database. For example, blue short sleeves are collocated with white trousers, and blue short sleeves are collocated with white skirts, etc. Pictures of single piece of clothes with high similarity to the selected clothes are selected from the suit pictures and are displayed as the recommended collocation solution on the intelligent terminal. For example, if the selected clothes to be collocated are blue short sleeves, then the intelligent terminal displays the picture of blue short sleeves with white trousers and the picture of blue short sleeves with white skirts, which are stored in the clothes collocation database, as the recommended collocation solution.

Optionally, a plurality of pictures of single piece of clothes are stored in the clothes collocation database. Each picture of single piece of clothes corresponds to multiples pictures of single piece of clothes matching the picture of single piece of clothes. For example, the picture of the blue short sleeves corresponds to the picture of the collocated white trousers and the picture of the collocated white skirt. The intelligent terminal displays the multiple pictures of single piece of clothes corresponding to the selected clothes as the recommended collocation solution. For example, if the selected clothes to be collocated are blue short sleeves, then the intelligent terminal displays the pictures of the white trousers and the pictures of the white skirts, stored in the clothes collocation database, as the recommended collocation solution.

In S240, the recommended collocation solution is displayed.

If the clothes do not need to be collocated, S250 is executed: the clothes are excluded, and then the clothes with the highest occurrence frequency in the photo album are researched for.

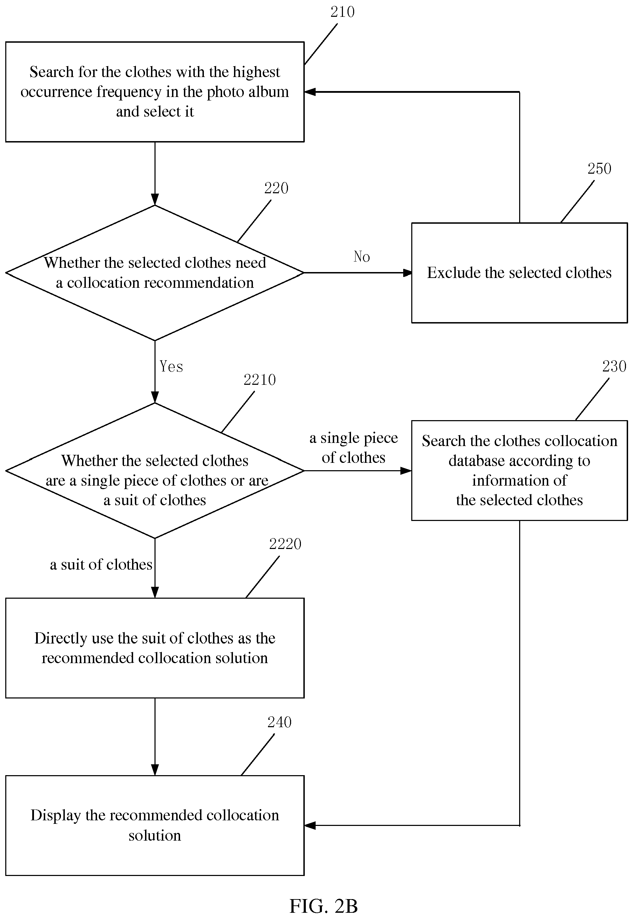

Optionally, Fig. 2B is a flowchart 2 illustrating a method for recommending clothes collocation provided in the embodiment 2 of the present disclosure. As shown in Fig. 2B, steps of searching clothes according to occurrence frequencies of the clothes in the photo album and searching a clothes collocation database according to information of the clothes when a preset condition is satisfied include: S210, the clothes with the highest occurrence frequency in the photo album are found and selected.

S220, whether the selected clothes need a collocation recommendation is judged. If the selected clothes need a collocation recommendation,

S2210, whether the selected clothes are a single piece of clothes or a suit of clothes is judged; and when the selected clothes are a single piece of clothes, the preset condition is satisfied and S230 is executed.

The method for recommending clothes collocation also includes: when the selected clothes are a suit of clothes, S2220 is executed: the suit of clothes is directly used as the recommended collocation solution; and then S240 is executed, the recommended collocation solution is displayed.

Embodiments of the present disclosure provide a method for recommending clothes collocation. The photo album of the intelligent terminal is accessed; the clothes are found according to the occurrence frequency of the clothes in the photo album; the clothes with the highest occurrence frequency in the photo album are found and selected; whether the selected clothes need a collocation recommendation is judged; if the selected clothes need a collocation recommendation, the clothes collocation database is searched according to the selected information of the clothes to obtain a recommended collocation solution and display the recommended collocation solution; if the selected clothes do not need any collocation recommendation, the selected clothes are excluded, and then the clothes with the highest occurrence frequency in the photo album is researched for. Favorite clothes of a user can be selected from the photo album of the intelligent terminal; and the recommended collocation solution can be obtained according to the information of the clothes, thereby saving user' time for clothes collocation and satisfying a fashionable need of the user.

### Embodiment 3

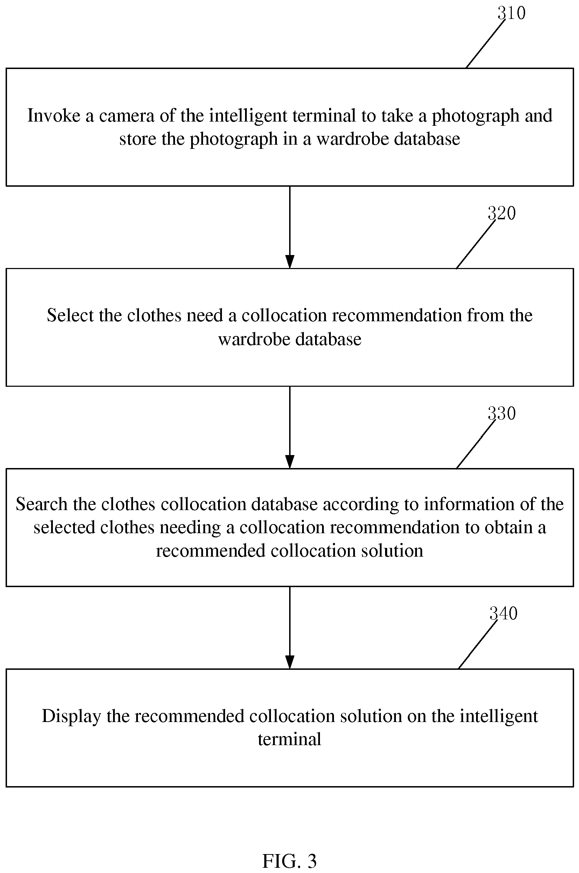

Fig. 3 is a flowchart illustrating a method for recommending clothes collocation provided in the embodiment 3 of the present disclosure. When a user sets that an application program with a clothes collocation function is not allowed to access the photo album, as shown in Fig. 3, the following steps are conducted.

In S310, a camera of the intelligent terminal is invoked to take a photograph and the photograph is stored in a wardrobe database.

In S320, the clothes needing a collocation recommendation are selected from the wardrobe database.

In S330, the clothes collocation database is searched according to the information of the selected clothes needing a collocation recommendation to obtain a recommended collocation solution.

In S340, the recommended collocation solution is displayed on the intelligent terminal.

An obtaining mode of the collocation solution in S330 is similar to that in S230, and is not repeated herein.

Optionally, since the collocated clothes vary with different seasons, to enhance recommendation accuracy, the clothes collocation database may be searched according to the selected information of the clothes and time information for collocation recommendation to obtain a collocation solution matching the current time information and information of the clothes. The time information may be season information.

Optionally, since the collocated clothes vary with different geographical regions, current geographical position information of the user may also be obtained. The clothes collocation database is searched with reference to the geographical position information so as to obtain a collocation solution matching the current time information, the information of the clothes and the geographical position information.

In addition, to further enhance recommendation accuracy, before the clothes collocation database is searched, an application scenario may be selected, e.g., outdoors, a fitness room, a company, a house, a feast and the like. The clothes collocation is recommended under the corresponding application scenario, thereby realizing more pertinence and better user experience.

Embodiments of the present disclosure provide a method for recommending clothes collocation. When an application program with a clothes collocation function is not allowed to access the photo album of the intelligent terminal, a camera of the intelligent terminal is invoked to take a photograph and the photograph is stored in a wardrobe database; the clothes needing the collocation recommendation are selected from the wardrobe database; the clothes collocation database is searched according to the information of the selected clothes needing the collocation recommendation to obtain a recommended collocation solution; and the recommended collocation solution is displayed on the intelligent terminal, thereby realizing recommendation of the clothes collocation and satisfying user needs when the application program with the clothes collocation function is not allowed to access the photo album of the intelligent terminal.

### Embodiment 4

The embodiments 4 of the present disclosure also provide a non-transitory computer storage medium. The computer storage medium stores computer-executable instructions. The computer-executable instructions can execute the method for recommending clothes collocation in any of above method embodiments.

### Embodiment 5

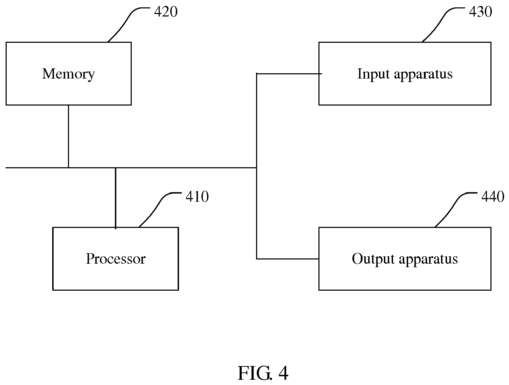

Fig. 4 is a schematic diagram illustrating a hardware structure of an intelligent terminal provided in the embodiment 5 of the present disclosure. As shown in Fig. 4, the intelligent terminal includes:
one or more processors 410 and a memory 420. FIG. 4 exemplarily illustrates one processor 410.

The intelligent terminal may further include: an input apparatus 430 and an output apparatus 440.

The processor 410, the memory 420, the input apparatus 430 and the output apparatus 440 may be connected through a bus or other modes. Connection through the bus is taken as an example in Fig. 4.

The memory 420 as a non-transitory computer-readable storage medium may store non-transitory software programs, non-transitory computer-executable programs and modules, such as corresponding program instructions/modules (e.g., a finding module, a collocating module and a display module) in the method for recommending clothes collocation in embodiments of the present disclosure. The processor 410 executes various functional applications and data processing of a server by running the non-transitory software programs, the instructions and the modules stored in the memory 420, thereby realizing the method for recommending clothes collocation in above method embodiments.

The memory 420 may include a program storage region and a data storage region. The program storage region may store application programs required by an operating system and at least one function, and the data storage region can store data created according to use of a terminal interacting with the application program, and the like. In addition, the memory 420 may include a high-speed random access memory, and may also include a non-transitory memory, such as at least one disk storage device, flash memory device or other non-transitory solid-state storage devices. In some embodiments, the memory 420 optionally includes memories arranged remotely relative to the processor 410. The remote memories can be connected to the terminal interacting with the application program through a network.

The above network example includes but not limited to Internet, Intranet, LAN, a mobile communication network and a combination of above.

The input apparatus 430 can receive inputted digital or character information and generate user setting of the terminal interacting with the application program and key signal input related to function control. The output apparatus 440 can include a display screen and other display devices.

The one or more modules are stored in the memory 420, and when the modules are executed by the one or more processors 410, the method for recommending clothes collocation in any of above method embodiments is executed.

The above product can execute the method provided in embodiments of the present application, and has corresponding functional modules for executing the method and beneficial effects. Technical details not detailed in the present embodiment can be found in the method provided in embodiments of the present application.

### Industrial Applicability

Through the above technical solution in embodiments of the present disclosure, the favorite clothes of the user can be selected from the photo album of the intelligent terminal; and the recommended collocation solution can be obtained according to the information of the clothes, thereby saving user's time for clothes collocation and satisfying a fashionable need of the user.

## Claims

1. A method for recommending clothes collocation, applied to an intelligent terminal, comprising:
accessing a photo album of the intelligent terminal and searching for clothes according to occurrence frequencies of the clothes in the photo album;
searching a clothes collocation database according to information of clothes when a preset condition is satisfied; and
displaying a recommended collocation solution,
wherein the clothes collocation database is a local database; and/or the clothes collocation database is stored on a server and the intelligent terminal is in communication connection with the server.

2. The method for recommending clothes collocation according to claim 1, wherein the searching for clothes according to occurrence frequencies of the clothes in the photo album and searching a clothes collocation database according to information of the clothes when a preset condition is satisfied comprises:
searching for clothes with a highest occurrence frequency in the photo album and selecting the clothes with the highest occurrence frequency;
judging whether the selected clothes need a collocation recommendation; and
if the selected clothes need a collocation recommendation, searching the clothes collocation database according to information of the selected clothes; if the selected clothes do not need any collocation recommendation, excluding the selected clothes and then searching again for clothes with the highest occurrence frequency in the photo album.

3. The method for recommending clothes collocation according to claim 2, wherein the searching for clothes according to occurrence frequencies of the clothes in the photo album and searching a clothes collocation database according to information of clothes when a preset condition is satisfied comprises:
searching for clothes with the highest occurrence frequency in the photo album and selecting the clothes with the highest occurrence frequency;
judging whether the selected clothes need the collocation recommendation;
if the selected clothes need the collocation recommendation, judging whether the selected clothes are a single piece of clothes or a suit of clothes; and searching the clothes collocation database according to the information of the selected clothes when the selected clothes are a single piece of clothes.

4. The method for recommending clothes collocation according to claim 3, further comprising: if the selected clothes are a suit of clothes, directly using the suit of clothes as the recommended collocation solution.

5. The method for recommending clothes collocation according to claim 2, wherein searching for the clothes with the highest occurrence frequency in the photo album and selecting the clothes with the highest occurrence frequency comprises:
searching for the clothes with the highest occurrence frequency in the photo album according to color and style information and selecting the clothes with the highest occurrence frequency.

6. The method for recommending clothes collocation according to claim 1, further comprising:
invoking a camera of the intelligent terminal to take a photograph and storing the photograph in a wardrobe database;
selecting the clothes needing a collocation recommendation from the wardrobe database;
searching the clothes collocation database according to information of the selected clothes needing the collocation recommendation to obtain the recommended collocation solution; and
displaying the recommended collocation solution on the intelligent terminal.

7. The method for recommending clothes collocation according to any one of claims 1-6, the searching a clothes collocation database according to information of clothes comprises:
searching the clothes collocation database according to information of the selected clothes needing the collocation recommendation and time information to obtain the collocation solution matching the current time information and information of the clothes.

8. The method for recommending clothes collocation according to any one of claims 2-6, wherein the searching a clothes collocation database according to information of the clothes further comprises: searching the clothes collocation database according to the information of the selected clothes needing the collocation recommendation, the time information and geographical position information to obtain the collocation solution matching the current time information, the information of the clothes and the geographical position information.

9. The method for recommending clothes collocation according to any one of claims 1-8, wherein before searching the clothes collocation database, the method further comprises:
selecting an application scenario.

10. The method for recommending clothes collocation according to claim 9, wherein the application scenario comprises outdoors, a fitness room, a company, a house and a feast.

11. An intelligent terminal, comprising:
at least one processor and
a memory in communication connection with the at least one processor, wherein the memory stores instructions executable by the at least one processor, and execution of the instructions by the at least one processor causes the at least one processor to perform the method for recommending clothes collocation of any one of claims 1-9.

12. A non-transitory computer readable storage medium storing computer instructions, wherein the computer instructions are configured to cause a computer to execute the method for recommending clothes collocation of any one of claims 1-9.

13. A computer program product, comprising a calculation program stored on a non-transitory computer readable storage medium, wherein the computer program comprises program instructions, and when the program instructions are executed by a computer, the computer is caused to execute the method for recommending clothes collocation of any one of claims 1-9.
